# EUROPEAN PATENT SPECIFICATION

(11) **EP 3 498 592 B1**
(45) Date of publication and mention of the grant of the patent: **02.09.2020**
(21) Application number: 17208796.7
(22) Date of filing: 20.12.2017
(51) Int. Cl.: B64C 1/26, B64C 1/06, B64C 3/18, B64C 3/24, B64C 3/26

(54) **AIRPLANE**
FLUGZEUG
AVION

(30) Priority: 13.12.2017 PL 42386817
(43) Date of publication of application: 19.06.2019
(73) Proprietor: FLARIS Spolka z ograniczona odpowiedzialnoscia, 58-560 Jelenia Gora (PL)
(72) Inventor: Ladzinski, Rafal, 58-560 Jelenia Gora (PL)
(74) Representative: Budzinski, Slawomir

(56) References cited:
- GB-A- 602 912
- US-A1- 2005 082 425
- US-A1- 2009 302 159
- US-B1- 8 939 810

## Description

The subject-matter of the invention relates to an airplane, in which in a former of a fuselage of the airplane a girder is seated and mounted, to which lifting elements of the airplane are mounted such as wings or elements of flight controls of the airplane, in particular of a small airplane.

A typical airplane consists of such main elements as a fuselage that binds all the remaining elements, wings that provide aerodynamic lift at an appropriate velocity, a motor that enables the airplane to reach such appropriate velocity, elements of flight controls providing steerability of the airplane in air, and a landing gear that enables taking-off and landing of the airplane.

Wings that provide appropriate, i.e. considerable, force so as to enable movement of the airplane both during taking-off/landing and the main flight, are of course produced substantially separately from the fuselage and they are mounted after the fuselage is assembled. First of all such mounting must ensure suitable distribution of forces originated from the wings into the spatial structure of the fuselage so as that to eliminate even a slight concern about the mounting of the wings or elements of flight controls to the fuselage of the airplane at any stage of operation.

For this purpose, in the commonly applied solutions a junction is used for mounting such lifting elements to the fuselage in a form of a former being an element of the airplane fuselage and a girder to which the lifting elements are connected such as wings or elements of flight controls.

This solution consists on that a girder that constitutes an elongated bracket seated on a quite large surface in an airplane wing with a specifically shaped end, is embedded with this end within an opening in a former also along a specific length and coupled thereto. Such wing mounting on a girder of the fuselage, by means of the former that distributes forces originated from the lifting elements, has a task to distribute these forces appropriately.

From international patent specification WO 2008/121005 a solution of a junction for mounting lifting elements to an airplane fuselage is known where each of the two airplane wings is provided with two longitudinal elements that constitute girders of a profiled construction in order to improve stiffness. The girders in each of the wings converge towards each other outside the airplane. Each of the girders is seated in a former defined in a special box that constitutes an element of the airplane fuselage.

From international patent specification WO 2014/053298 a solution is known concerning a releasable junction for mounting lifting elements to an airplane fuselage where each of the two airplane wings is provided with two longitudinal elements that constitute girders with an axis perpendicular to the longitudinal axis of the airplane. In the airplane fuselage, at the site where the girders protruding from the wings are seated, there are formers shaped as sleeves extending across the width of the airplane fuselage and having an opening of a diameter corresponding to the diameter of the girders. In this solution there are also present additional elements to enable quick releasing of the mounting junction in order to dismount the wings.

The known solutions have undeniable advantages that enable to mount correctly airplane lifting elements, such as wings or elements of flight controls, and to distribute appropriately forces originated from such elements within the fuselage. Nevertheless, they exhibit some inconveniences including first of all a stringent requirement of particularly precise manufacturing tolerances for all the elements, excluding correction of any possible production irregularities.

It is the aim of this invention to avoid the inconveniences of the solutions known from the prior art and to provide a new quality junction for mounting lifting elements of an airplane.

Document US2009/0302159 discloses another aircraft wing mounting assembly.

According to the invention, an airplane as claimed in claim 1 is disclosed. Other aspects of the invention have been disclosed in the dependent claims.

The invention is shown in an embodiment in the drawing, where fig. 1 shows a junction of metal/composite structures of an airplane in a side cross-sectional view along the axis of mounting elements, fig. 2 shows a junction of metal/composite structures of an airplane in a cross-sectional view along a girder axis with the girder seated within a former, and fig. 3 shows a junction of metal/composite structures of an airplane in a cross-section along an axis of a girder with the girder pulled out from a former.

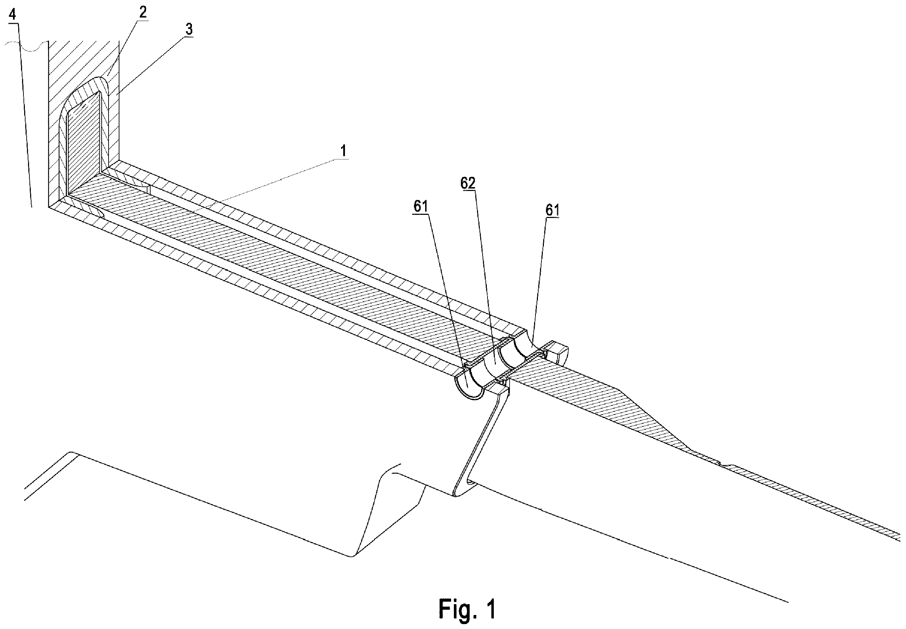

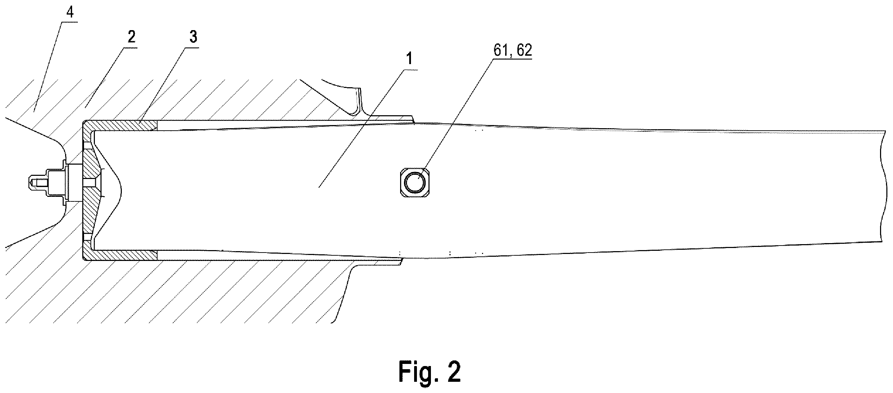

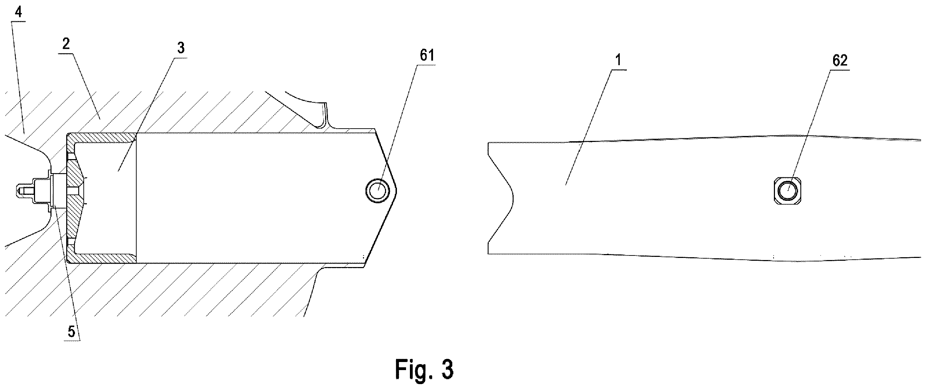

As shown in fig. 1, fig. 2, and fig. 3, a junction of metal/composite structures of an airplane is built of a former (2) installed in a fuselage (4) of an airplane and having and opening extending outside the airplane fuselage (4), and a girder (1) seated within the opening of the former (2). The girder (1) is a slender element connected with one its end to a lifting element of the airplane (not shown) such as a wing or a stabilizer or some other lifting element of the airplane.

The opening in the former (2) constitutes thus a seat for seating the girder (1). At an end of the seat being the opening in the former (2) there is an insert (3), in this embodiment made of plastics. The opening in the former (2) has in its cross-section lateral to its longitudinal axis a shape of a rectangle with its long sides oriented vertically.

The insert (3) has a shape of a sleeve of a rectangular cross-sectional shape, closed at the side of the former (2), the outer shape of which represents the inner shape of the of the former (2) of the fuselage (4) and the inner shape represents the outer shape of an end of the girder (1). The height of the insert (3), as measured along the opening of the former (2), corresponds in this embodiment to 1/4 of the depth of the opening in the former (2).

The insert (3) is mounted within the former (2) to the fuselage (4) of the airplane by means of an axially arranged coupling element (5), being in this embodiment a blind rivet.

The girder (1) in its part introduced into the opening in the former (2) has a frusto-pyramidal shape with a rectangular base and has a rectangular cross-section the dimensions of which change along the girder (1) so as at its end inserted within the former (2) they represent the dimensions of the cross-section of the insert (3) and along its length corresponding to the depth of the opening in the former (1) with the insert (3) seated therein they represent the dimensions of the inner cross-section of the opening in the former (2).

Such construction of the girder (1) enables seating of the girder in the former (2) very precisely and reliably, since any possible production irregularities of the girder (1) along a length inside the opening in the former (2) do not affect fitting between these two elements. The positioning of the girder (1) within the former (2) becomes fixed at the end of the girder (1) within the insert (3) and along a terminal segment of the opening in the former (2) at the outer side.

The girder (1) is provided with first mounting openings (62) and the former (2) is provided with second mounting openings (61) that are axially aligned when the girder (1) is seated within the opening of the former (2). Through the second mounting openings (61) in the former (2) and the first mounting openings (62) in the girder (1) these two elements are coupled with each other by means of a threaded connection. In the embodiment shown in fig. 1, fig. 2, and fig. 3 both in the first mounting openings (62) and in the second mounting openings (61) intermediate sleeves are positioned.

In the embodiment shown in fig. 1, fig. 2, and fig. 3 elements of the junction of metal/composite structures of the airplane such as the former (2) and the insert (3) are made of plastics and the girder (1) is made of a composite of plastics.

## Claims

1. Airplane comprising a lifting element, a fuselage (4) and a girder (1) for coupling the lifting element with the fuselage (4), wherein the fuselage (4) comprises a former (2) for seating and fixing the girder (1), wherein the former (2) comprises an insert (3) placed in an opening in the former (2), wherein the insert (3) has an inner shape that represents the outer shape of an end of the girder (1),
**characterized in that**
the insert (3) has an outer shape that represents the inner shape of the former (2) of the fuselage (4), wherein the height of the insert (3) as measured along the opening in the former (2) corresponds to at most a half of the depth of the opening in the former (2).

2. Airplane according to claim 1, **characterized in that** the opening in the former (2) has a rectangular shape in its cross-section, and the insert (3) in its cross-section has a shape of a rectangle of smaller dimensions that the dimensions of the cross-section of the former (2), where the girder (1), in its part that enters into the opening in the former (2), has a frusto-pyramidal shape with a base in a shape of a rectangle, and has a cross-sectional shape of a rectangle, and the dimensions of the latter rectangle alter so that at its end insertable into the former (2) they represent the inner sectional dimensions of the insert (3) while at the length corresponding to the depth of the opening in the former (1) with the insert (3) inserted therein they represent the inner cross-section of the opening in the former (1).

3. Airplane according to claim 1, **characterized in that** the insert (3) is fixed within the former (2) of the airplane fuselage (4) by means of a coupling element (5).

4. Airplane according to claim 3, **characterized in that** the coupling element (5) is a blind rivet.

5. Airplane according to claim 3, **characterized in that** the coupling element (5) is a bolt with a nut.

6. Airplane according to claim 1, **characterized in that** the insert (3) is fixed within the former (2) to the airplane fuselage (4) by means of gluing.

7. Airplane according to claim 1, **characterized in that** the insert (3) is made of plastics.

8. Airplane according to claim 1, **characterized in that** the girder (1) is made of a composite of plastics.

9. Airplane according to claim 1, **characterized in that** the girder (1) when seated in the former (2), is coupled therewith by means of a threaded connection through first mounting openings (62) in the former (2) and second mounting openings (61) in the girder (1).

10. Airplane according to claim 9, **characterized in that** in the first mounting openings (62) in the former (2) and in the second mounting openings (61) in the girder (1) intermediate sleeves are positioned.

## Patentansprüche

1. Ein Flugzeug mit einem Hubelement, einem Rumpf (4) und einem Träger (1) zum Verbinden des Hubelements mit dem Rumpf (4), wobei der Rumpf (4) einen Spant (2) zum Auflegen und Befestigen des Trägers (1) aufweist, wobei der Spant (2) einen Einsatz (3) aufweist, der in einer Öffnung im Spant (2) angeordnet ist, wobei der Einsatz (3) eine innere Form aufweist, die die äußere Form eines Trägerendes (1) wiedergibt, **dadurch gekennzeichnet, dass**
der Einsatz (3) eine äußere Form hat, die die innere Form des Spants (2) im Rumpf (4) wiedergibt, wobei die Höhe des Einsatzes (3), gemessen entlang der Öffnung im Spant (2) höchstens der Hälfte der Tiefe der Öffnung im Spant (2) entspricht.

2. Ein Flugzeug nach Anspruch 1, **dadurch gekennzeichnet, dass** die Öffnung im Spant (2) einen Querschnitt in rechteckiger Form aufweist und der Einsatz (3) einen Querschnitt in rechteckiger Form mit kleineren Maßen als die Maße des Querschnitts des Spants (2) aufweist, wobei der Träger (1) in den Bereichen, wo er in die Öffnung im Spant (2) eingreift, kegelstumpfförmig ist und eine Basis in rechteckiger Form und einen Querschnitt in rechteckiger Form aufweist, und die Maße des letzteren Rechtecks sich so ändern, dass sie an einem Ende in den Spant (2) eingeführt werden können und dann wiedergeben sie die inneren Querschnittsmaße des Einsatzes (3), während sie, was die Länge angeht, die der Tiefe der Öffnung im Spant (1) und dem darin eingesetzten Einsatz (3) entspricht, die den inneren Querschnitt der Öffnung im Spant (1) wiedergeben.

3. Ein Flugzeug nach Anspruch 1, **dadurch gekennzeichnet, dass** der Einsatz (3) im Spant (2) des Flugzeugrumpfes (4) mittels eines Kupplungselementes (5) befestigt ist.

4. Ein Flugzeug nach Anspruch 3, **dadurch gekennzeichnet, dass** das Kupplungselement (5) ein Blindniet ist.

5. Ein Flugzeug nach Anspruch 3, **dadurch gekennzeichnet, dass** das Kupplungselement (5) eine Schraube mit Mutter ist.

6. Ein Flugzeug nach Anspruch 1, **dadurch gekennzeichnet, dass** der Einsatz (3) innerhalb des Spants (2) am Flugzeugrumpf (4) mit Klebstoff befestigt wird.

7. Ein Flugzeug nach Anspruch 1, **dadurch gekennzeichnet, dass** der Einsatz (3) aus Kunststoff ausgeführt ist.

8. Ein Flugzeug nach Anspruch 1, **dadurch gekennzeichnet, dass** der Träger (1) aus einem Verbundwerkstoff ausgeführt ist.

9. Ein Flugzeug nach Anspruch 1, **dadurch gekennzeichnet, dass** der Träger (1), wenn er im Spant (2) platziert ist, mit diesem mittels einer Schraubverbindung durch die ersten Montageöffnungen (62) im Spant (2) und die zweiten Montageöffnungen (61) im Träger (1) verbunden ist.

10. Ein Flugzeug gemäß Anspruch 9, **dadurch gekennzeichnet, dass** Zwischenhülsen in den ersten Montageöffnungen (62) im Spant (2) und in den zweiten Montageöffnungen (61) im Träger (1) eingesetzt sind.

## Revendications

1. Avion comprenant un élément de levage, un fuselage (4) et une poutre (1) pour coupler l'élément de levage avec le fuselage (4), dans lequel le fuselage (4) comprend une membrure (2) pour placer et fixer la poutre (1), dans lequel la membrure (2) comprend un insert (3) placé dans une ouverture de la membrure (2), dans lequel l'insert (3) a une forme intérieure qui représente la forme extérieure d'une extrémité de la poutre (1), **caractérisé en ce que** l'insert (3) a une forme extérieure qui représente la forme intérieure de la membrure (2) du fuselage (4), dans lequel la hauteur de l'insert (3), telle que mesurée le long de l'ouverture dans la membrure (2), correspond au maximum à la moitié de la profondeur de l'ouverture dans la membrure (2).

2. Avion selon la revendication 1, **caractérisé en ce que** l'ouverture dans la membrure (2) a une forme rectangulaire dans sa section transversale, et l'insert (3) dans sa section transversale a la forme d'un rectangle de dimensions plus petites que les dimensions de la section transversale de la membrure (2), où la poutre (1), dans sa partie qui pénètre dans l'ouverture de la membrure (2), a une forme tronco-pyramidale avec une base en forme de rectangle, et a une forme de section transversale d'un rectangle, et les dimensions de ce dernier rectangle changent de sorte qu'à leur extrémité insérable dans la membrure (2), elles représentent les dimensions de la section intérieure de l'insert (3) tandis qu'à la longueur correspondant à la profondeur de l'ouverture dans la membrure (1) avec l'insert (3) inséré dedans, ils représentent la section intérieure de l'ouverture dans la membrure (1).

3. Avion selon la revendication 1, **caractérisé en ce que** l'insert (3) est fixé à l'intérieur de la membrure (2) du fuselage de l'avion (4) au moyen d'un élément d'accouplement (5).

4. Avion selon la revendication 3, **caractérisé en ce que** l'élément d'accouplement (5) est un rivet borgne.

5. Avion selon la revendication 3, **caractérisé en ce que** l'élément d'accouplement (5) est un boulon avec un écrou.

6. Avion selon la revendication 1, **caractérisé en ce que** l'insert (3) est fixé à l'intérieur de la membrure (2) au fuselage de l'avion (4) par collage.

7. Avion selon la revendication 1, **caractérisé en ce que** l'insert (3) est réalisé en matière plastique.

8. Avion selon la revendication 1, **caractérisé en ce que** la poutre (1) est réalisée en composite de plastique.

9. Avion selon la revendication 1, **caractérisé en ce que** la poutre (1), lorsqu'elle est placée dans la membrure (2), est couplée à celle-ci au moyen d'un assemblage fileté à travers les premières ouvertures de montage (62) dans la membrure (2) et les secondes ouvertures de montage (61) dans la poutre (1).

10. Avion selon la revendication 9, **caractérisé en ce que** dans les premières ouvertures de montage (62) de la membrure (2) et dans les secondes ouvertures de montage (61) de la poutre (1), des manchons intermédiaires sont placés.
